# FASCICULE DE BREVET EUROPEEN

(11) **EP 1 529 681 B1**
(45) Date de publication et mention de la délivrance du brevet: **25.10.2006**
(21) Numéro de dépôt: 04292541.2
(22) Date de dépôt: 26.10.2004
(51) Int. Cl.: B60N 2/30, B60N 2/36

(54) **Siège escamotable, notamment siège de véhicule automobile et véhicule automobile correspondant**
Klappsitz, insbesondere Kraftfahrzeugsitz und entsprechendes Kraftfahrzeug.
Retractable seat, especially automotive vehicle seat and according vehicle.

(30) Priorité: 06.11.2003 FR 0313064
(43) Date de publication de la demande: 11.05.2005
(73) Titulaire: Peugeot Citroën Automobiles S.A., 78140 Vélizy Villacoublay (FR)
(72) Inventeur: Combeau, Frédéric, 25200 Grand Charmont (FR)
(74) Mandataire: Jacobson, Claude

(56) Documents cités:
- EP-A- 0 769 410
- FR-A- 2 565 908
- US-A- 6 070 934
- US-B1- 6 196 613
- PATENT ABSTRACTS OF JAPAN vol. 2003, no. 12, 5 décembre 2003 (2003-12-05) -& JP 2003 252095 A (NHK SPRING CO LTD), 9 septembre 2003 (2003-09-09)

## Description

La présente invention concerne un siège escamotable, notamment siège de véhicule automobile, du type décrit dans le préambule de la revendication 1.

Un siège connu du type précité est décrit dans le document FR-A-2 565 908. Il comprend une assise montée sur le plancher du véhicule et un dossier escamotable articulé à cette assise par l'intermédiaire d'une tringlerie complexe. Cette tringlerie permet de déplacer le dossier entre sa position active et une position escamotée par la combinaison d'un mouvement de rotation autour d'un pivot d'articulation transversal par rapport au siège et d'un mouvement simultané de translation relative du dossier par rapport à l'assise.

De tels sièges ne donnent pas entière satisfaction. En effet, il est nécessaire de replier le siège dans sa position totalement escamotée pour augmenter le volume de chargement du véhicule. Les possibilités d'aménagement intérieur du véhicule sont donc limitées.

L'invention a pour but de remédier à cet inconvénient, c'est-à-dire de proposer un siège escamotable pour véhicule, qui permette d'augmenter les possibilités d'aménagement intérieur du véhicule.

A cet effet, l'invention a pour objet un siège escamotable selon la revendication 1.

Le siège selon l'invention peut comprendre l'une ou plusieurs des caractéristiques des revendications 2 à 8, prise(s) isolément ou suivant toutes combinaisons techniquement possibles.

L'invention a en outre pour objet un véhicule automobile selon la revendication 9.

Ce véhicule peut comprendre la caractéristique de la revendication 10.

L'invention sera mieux comprise à la lecture de la description qui va suivre, donnée uniquement à titre d'exemple et faite en se référant aux dessins annexés, sur lesquels :
- la Figure 1 est une vue en perspective de l'armature d'un siège escamotable selon l'invention, en position active ;
- la Figure 2 est une vue d'un détail de la Figure 1 ;
- la Figure 3 est une vue analogue à la Figure 1, en position de pré-escamotage ;
- la Figure 4 est une vue analogue à la Figure 1, en position escamotée ; et
- la Figure 5 est une vue partielle en perspective de l'aménagement intérieur d'un véhicule selon l'invention.

Dans tout ce qui suit, les orientations utilisées sont les orientations habituelles d'un véhicule automobile. Ainsi, les termes « avant », « arrière », « droit », « gauche », « inférieur », et « supérieur » s'entendent par rapport à la position d'un conducteur de véhicule automobile et à son sens de marche.

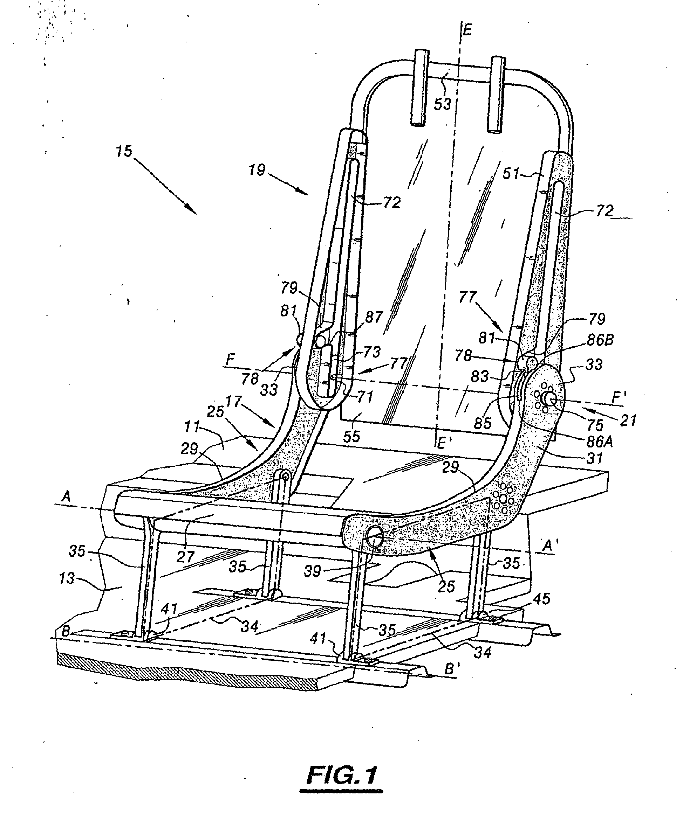

L'extrémité arrière d'un véhicule automobile est représentée partiellement sur la Figure 1. Cette extrémité comprend un plancher 11, dans lequel est ménagé un logement 13. La base d'un siège 15 escamotable est fixée dans ce logement 13. Seule l'armature de ce siège 15 est représentée sur la Figure 1.

Ce siège 15 comprend une structure d'assise 17 et un support de dossier 19, articulé sur cette structure 17 par des moyens d'articulation 21.

Le siège 15 définit une direction longitudinale et une direction transversale par rapport à un passager, assis sur le siège.

La structure 17 comprend deux longerons 25 qui s'étendent suivant la direction longitudinale. Les longerons 25 sont reliés entre eux depuis des extrémités avant, par une traverse 27 transversale.

Chaque longeron 25 comprend une portion avant 29 qui s'étend sensiblement horizontalement, et une portion arrière 31 qui s'étend suivant une direction inclinée sensiblement de 45° par rapport à l'horizontale, vers le haut, et munie à l'arrière d'une oreille 33.

L'ensemble formé par les portions avant 29 et la traverse 27 est adapté pour soutenir un coussin d'assise (non représenté sur la Figure 1).

Par ailleurs, la structure 17 est reliée au fond du logement 13 par l'intermédiaire de deux quadrilatères d'articulation 34 déformables, parallèles à un plan médian du siège et symétriques par rapport à ce plan.

Chaque quadrilatère 34 comprend deux cotés opposés comportant chacun une bielle 35.

Chaque bielle 35 est articulée en une extrémité supérieure 39 à la structure 17, autour d'un axe transversal A-A' de structure.

De même, chaque bielle 35 est articulée depuis une extrémité inférieure 41 en un point du fond du logement 13, autour d'un axe B-B' de plancher parallèle à l'axe A-A'.

Des moyens de verrouillage (non représentés) sont prévus pour bloquer la rotation de chaque bielle 35 autour de l'axe B-B', lorsqu'ils sont activés.

Le support 19 comprend deux montants 51, reliés entre eux par une traverse supérieure 53 depuis des extrémités supérieures. Un flasque 55 de fond de dossier, destiné à supporter un coussin de dossier (non représenté) est fixé à l'arrière du support 19.

Chaque montant 51 s'étend parallèlement à un axe E-E' longitudinal de coulissement, sensiblement vertical sur la Figure 1, entre l'extrémité supérieure et une extrémité inférieure. Chaque montant 51 est relié respectivement à un longeron 25 au niveau de son extrémité inférieure, par les moyens d'articulation 21.

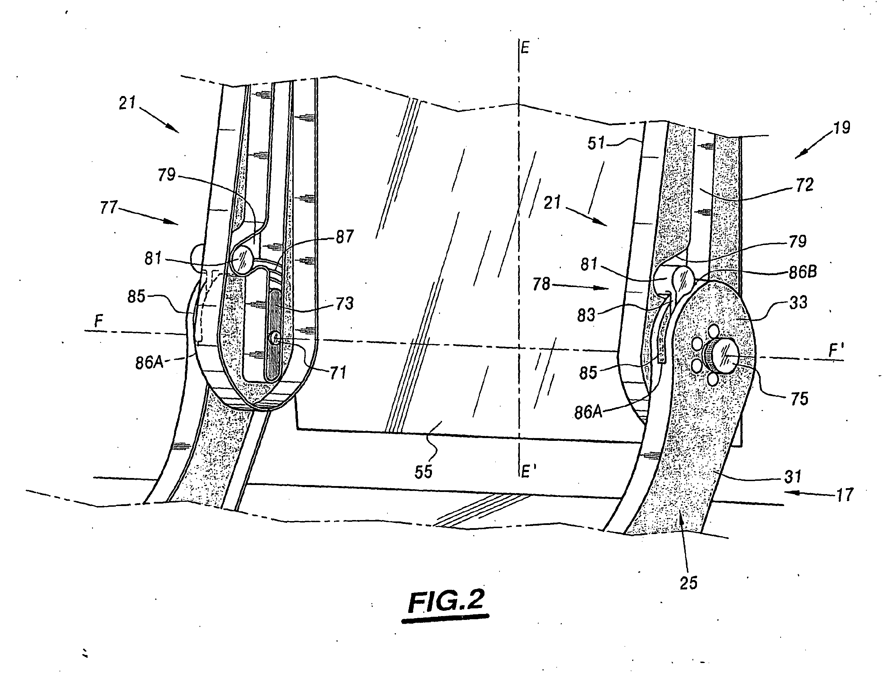

Comme illustré sur la Figure 2, les moyens d'articulation 21 du support 19 par rapport à la structure 17 comprennent, pour chaque montant 51, un pivot 71, une coulisse longitudinale 72 et un coulisseau 73, solidaire du pivot 71.

L'ensemble formé par le pivot 73 et le coulisseau 72 est monté rotatif dans l'oreille 33 autour d'un axe F-F' transversal d'articulation. Le support 19 est ainsi mobile en rotation autour de l'axe F-F' d'articulation, par rapport à la structure 17, entre une position active en saillie, dans laquelle l'axe de coulissement E-E' est sensiblement perpendiculaire à un axe horizontal et une position repliée dans laquelle l'axe E-E' est sensiblement parallèle à l'axe horizontal.

Des moyens de verrouillage 75 permettent de bloquer, de manière sélective, la rotation du pivot 71, et par suite du support 19 autour de l'axe d'articulation F-F'.

La coulisse 72 est formée d'une fente de largeur constante ménagée suivant la longueur du montant 51.

Le coulisseau 73 comporte un corps qui s'étend parallèlement à l'axe de coulissement E-E', et qui est disposé dans la coulisse 72. Ce corps comprend au moins un plat en appui sur une paroi latérale interne de la coulisse 72.

Le support 19 est ainsi mobile en translation par rapport à la structure 17, le long de l'axe E-E' de coulissement, entre une position avant, dans laquelle le coulisseau 73 est au voisinage d'un point inférieur de la coulisse 72 et une position arrière dans laquelle le coulisseau 73 est au voisinage d'un point supérieur de la coulisse 72.

Par ailleurs, des moyens de blocage 77 permettent de bloquer, de manière sélective, le mouvement de translation du support 19 le long de l'axe de coulissement E-E'.

Ces moyens de blocage 77 comprennent, pour chaque longeron 25, un index 78 monté rotatif autour de l'axe F-F' par rapport à la structure 17 et une encoche courbe 79, ménagée dans le montant 51 associé du support 17.

L'index 78 comprend une goupille 81 de forme cylindrique d'axe transversal disposée dans l'encoche 79 et portée à l'extrémité d'une patte de support 83.

La patte de support 83 fait saillie hors de l'oreille 33, à travers une fente 85 ménagée suivant un bord périphérique de l'oreille 33.

Cette patte 83 comprend une première extrémité montée dans l'oreille 33 et une extrémité libre en saillie hors de la fente 85, sur laquelle est montée la goupille 81.

La fente 85 s'étend suivant un bord périphérique de l'oreille 33 entre une extrémité inférieure 86A et une extrémité supérieure 86B.

Par ailleurs, la patte 83 est monté rotative autour de l'axe d'articulation F-F', le long d'un bord périphérique de l'oreille 33, entre l'extrémité supérieure 86B et l'extrémité inférieure 86A de la fente 85.

L'encoche 79 est ménagée dans le montant 51, entre un point arrière dans la coulisse 72 au voisinage de l'extrémité inférieure du montant 51 et un point avant dans le montant 51, situé à l'avant de la coulisse 72.

L'encoche 79 est de forme circulaire, en projection sur un plan médian du siège.

La longueur de l'encoche 79 est inférieure ou égale à la longueur de la fente 85. Ainsi, lorsque la fente 85 et l'encoche 79 sont placées en regard l'une de l'autre, lors de la rotation du support 19 par rapport à la structure 17 autour de l'axe d'articulation F-F', la goupille 81 peut être coulissée librement dans l'encoche 79 jusqu'à la coulisse 72, entre une position de blocage dans l'encoche 79 et une position libre dans la coulisse 72.

Un ressort 87 de mise en contrainte, disposé à l'intérieur de l'oreille 33 pousse la patte de support 83 et la goupille 81 vers l'extrémité inférieure 86A de la fente 85.

Par ailleurs, l'extrémité supérieure 86B de la fente est positionnée sur l'oreille 33 de sorte que, lors d'un déplacement du support 19 autour de l'axe d'articulation F-F' depuis sa position active jusqu'à sa position repliée, le point arrière de l'encoche 79 dépasse cette extrémité 86B uniquement à partir d'une position intermédiaire de libération du support 19 par rapport à la structure 17. Ainsi, entre la position active et cette position de libération, il est impossible de déplacer la goupille 81 jusqu'à sa position libre puisque celle-ci viendrait buter contre l'extrémité supérieure 86B de la fente 85.

De même, l'extrémité inférieure 86A de la fente 85 est placée de sorte que, lors d'un déplacement du support 19 autour de l'axe d'articulation F-F' au delà de la position de libération, il existe une position de déblocage du support 19 dans laquelle la goupille 81 bute contre l'extrémité inférieure 86A de la fente 85. Ainsi, lors d'un déplacement ultérieur du support 19 par rapport à la structure 17 vers la position repliée, la goupille 81 est immobilisée par rapport à la structure 17 à l'encontre du ressort 87 et atteint sa position libre dans la coulisse 72, lorsque le point arrière de l'encoche 79 est en regard de l'extrémité inférieure 86A de la fente 85.

Dans ce cas, lorsque la goupille 81 atteint sa position libre, le support 19 est dans sa position repliée.

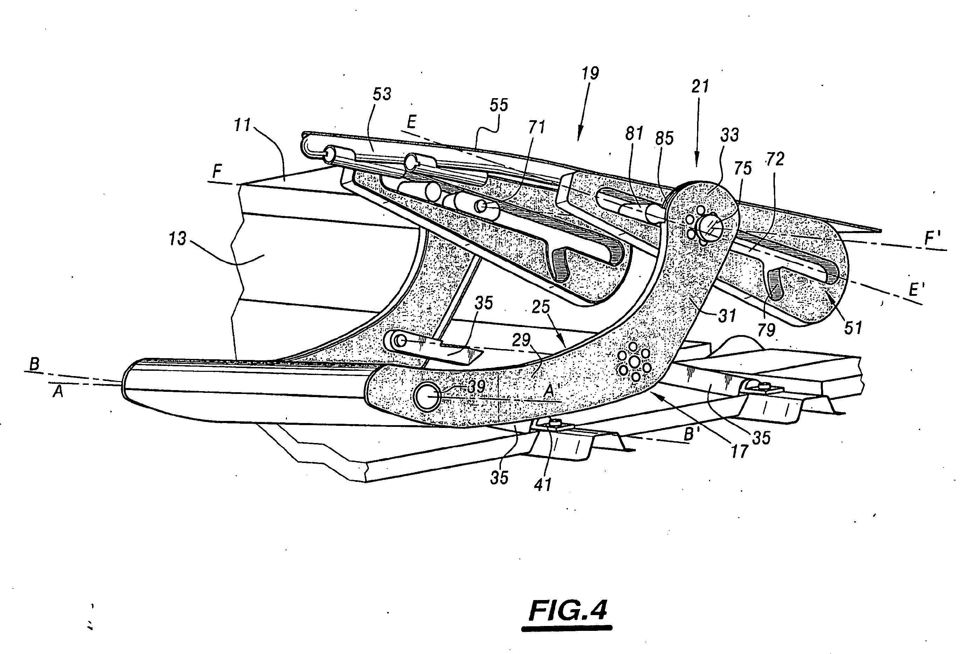

On décrira maintenant comme exemple le fonctionnement du siège escamotable 15 depuis sa position active (Figure 1) jusqu'à une position partiellement escamotée, puis depuis sa position active jusqu'à une position totalement escamotée (Figure 4). Ces différentes positions seront décrites en détail ci-dessous.

Initialement, et comme représenté sur la Figure 1, le support de dossier 19 est dans sa position active.

Dans cette position et comme précisé plus haut, l'axe de coulissement E-E' est sensiblement vertical. Le support 19 est en saillie par rapport à la structure 17. Par ailleurs, les pivots 71 sont positionnés au voisinage de l'extrémité inférieure des montants 51.

Lorsque le volume de chargement à l'arrière du siège 15 doit être légèrement augmenté, un opérateur libère les moyens de verrouillage 75 du support 19 sur la structure 17. Il pivote ensuite le support 19 d'environ 30° vers l'avant, autour de l'axe d'articulation F-F', par rapport à la structure 17 via le pivot 71 et le coulisseau 73. Le support 19 se trouve alors dans une position partiellement escamotée.

Dans cette position, l'index 78 est dans sa position de blocage, dans laquelle la goupille 81 est en appui sur les parois latérales de l'encoche 79. L'index 78 empêche ainsi le déplacement du support 19 en translation le long de l'axe E-E' par rapport à la structure 17.

Lorsque le volume de chargement doit être augmenté de manière significative à partir de la position active, l'opérateur pivote le support 19 vers l'avant autour de l'axe d'articulation F-F' par rapport à la structure 17, via le pivot 71 et le coulisseau 73, comme décrit précédemment.

Lorsque le point arrière de l'encoche 79 dépasse l'extrémité supérieure 86B de la fente 85, l'opérateur déplace la goupille 81 vers l'arrière le long de l'encoche 79 jusqu'à la coulisse 72. Lors de ce déplacement, la force de rappel élastique exercée par le ressort 87 sur la patte 83 est surmontée.

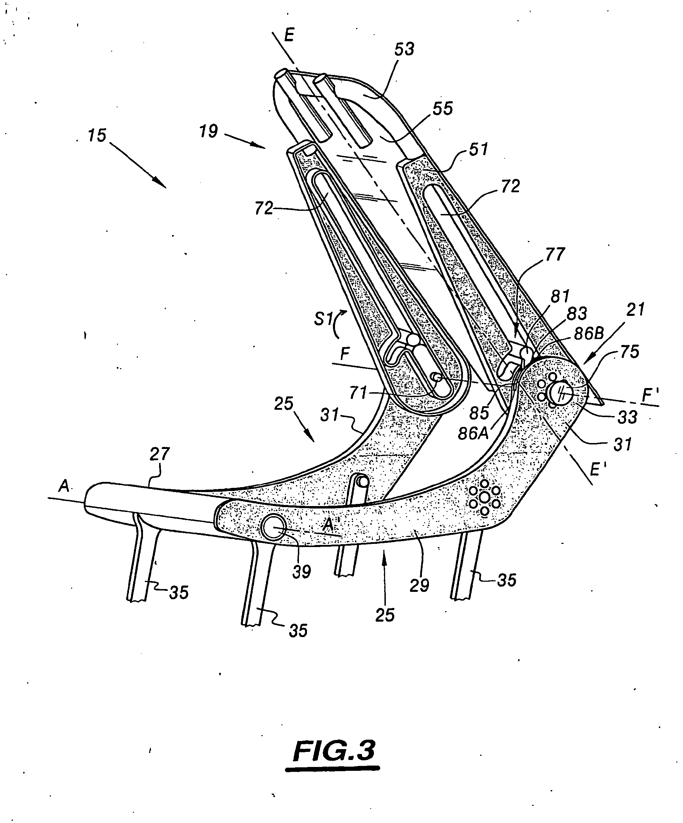

Ainsi, et comme représenté sur la Figure 3, la goupille 81 est positionnée dans la coulisse 72, dans sa position libre.

L'opérateur déplace alors le support 19 en translation par rapport à la structure 17, le long de l'axe E-E' de coulissement, vers l'arrière.

Si le support de dossier 19 est muni d'un appui-tête, ce dernier est décalé vers l'arrière.

Simultanément, l'opérateur pivote le support 19 autour du pivot 71 jusqu'à une position totalement escamotée où l'axe E-E' est sensiblement horizontal et où le coulisseau 73 est positionné au voisinage de l'extrémité supérieure du montant 51 (Figure 4).

Enfin, il libère les moyens de blocage (non représentés) des bielles d'articulation 35 de la structure 17. Il pivote la structure 17 vers l'avant, autour des axes de structure et de plancher A-A' et B-B', par l'intermédiaire des bielles 35, jusqu'à ce que la structure 17 repose sensiblement sur le fond du logement 13 (Figure 4). Dans cette position, l'axe de coulissement E-E' est légèrement incliné par rapport à l'horizontale et le support 19 est décalé vers l'arrière par rapport à la structure 17.

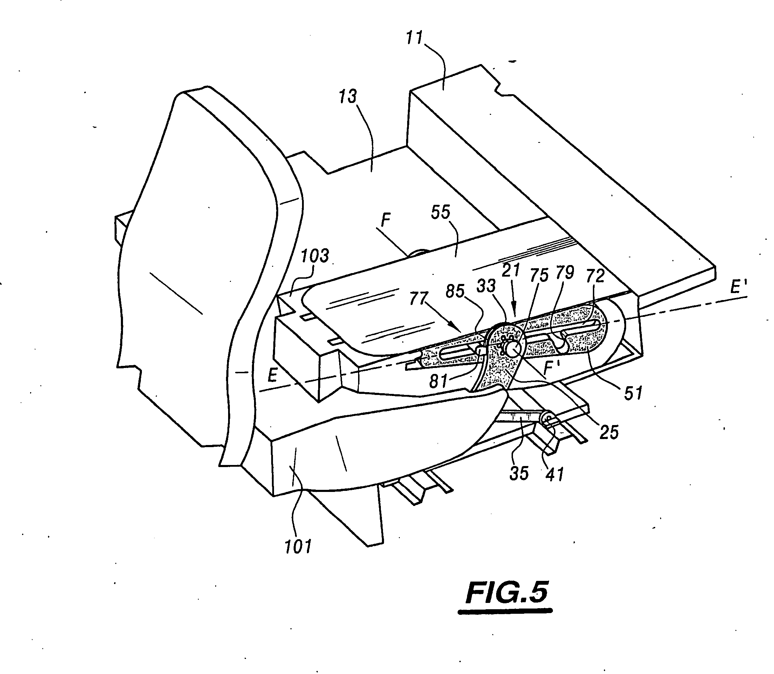

La Figure 5 est une vue identique à la Figure 4 dans laquelle les coussins d'assise 101 et de dossier 103 sont représentés. Comme illustré sur cette Figure, la position relative de la structure d'assise 17 et du support de dossier 19 optimise le positionnement relatif des coussins 101 et 103 de sorte que le flasque 55 s'étend sensiblement horizontalement dans le prolongement du plancher 11 du véhicule. Ainsi, dans la position escamotée du support 19, le logement 13 est obturé et la continuité du plancher 11 du véhicule est réalisée. Par ailleurs, le rapport entre l'épaisseur des coussins 101 et 103 et la hauteur du siège en position escamotée est optimal dans cette configuration.

Dans une première variante, le déplacement de la goupille 81 dans l'encoche 79 peut être provoqué lorsque cette goupille 81 bute contre l'extrémité inférieure 86A de la fente 85, lors du pivotement du support 19 autour de l'axe d'articulation E-E' depuis sa position active, sans action directe de l'opérateur du siège sur la goupille 81.

Dans une deuxième variante, l'index 78 est monté fixe sur l'oreille 33 du longeron 25 en une position angulaire déterminée sur le bord périphérique de l'oreille 33. Par ailleurs, un ressort de rappel est disposé entre le pivot 71 et le longeron 25 de sorte que le support de dossier 19 est rappelé dans sa position active.

A la différence du premier siège selon l'invention, les moyens de blocage 21 de la translation relative du support 19 par rapport à la structure 17 le long de l'axe de coulissement E-E' sont libérés uniquement lorsque le support 19 atteint par pivotement autour de l'axe F-F' une position angulaire prédéterminée par rapport à la structure 17, dans laquelle la goupille 81 est positionnée dans la coulisse 72. Cette position angulaire est déterminée par la position du index 78 sur le longeron 25.

Grâce à l'invention qui vient d'être décrite, il est possible de disposer d'un siège escamotable, qui augmente les possibilités d'aménagement intérieur d'un véhicule automobile. En effet, ce siège peut être escamoté partiellement ou totalement selon les besoins de l'utilisateur du véhicule.

Ce siège comprend des moyens d'articulation particulièrement simples et peu coûteux entre la structure d'assise et le support de dossier.

Ce siège est par ailleurs escamotable, même lorsqu'il est muni d'un appui-tête et quelle que soit la position de cet appui-tête.

Dans sa position totalement escamotée, ce siège peut être facilement disposé dans un logement ménagé dans le plancher du véhicule, de sorte que le plancher présente une continuité d'aspect.

## Revendications

1. Siège (15) escamotable, notamment siège de véhicule automobile, du type comprenant :
- une structure (17) d'assise;
- un support (19) de dossier, articulé sur la structure (17), autour d'un axe (F-F') d'articulation sensiblement transversal par rapport au siège (15), lequel support (19) est en outre monté mobile en translation par rapport à ladite structure (17) le long d'un axe (E-E') de coulissement, sensiblement perpendiculaire à l'axe d'articulation (F-F'), le support (19) étant mobile entre une position active en saillie par rapport à ladite structure (17) et une position escamotée ;
**caractérisé en ce que** les mouvements de translation et de rotation du support (19) par rapport à la structure (17) sont indépendants, et **en ce qu**'il comprend en outre des moyens indépendants (75 ; 77) de blocage respectivement en translation et en rotation de chacun desdits mouvements du support (19) par rapport à ladite structure (17).

2. Siège (15) selon la revendication 1, **caractérisé en ce qu**'il comprend des moyens d'articulation (21) entre la structure (17) et le support (19), ces moyens d'articulation (21) comprenant :
- une coulisse (72), ménagée dans le support (19) et s'étendant sensiblement parallèlement à l'axe de coulissement (E-E') ;
- un coulisseau (73), monté rotatif sur la structure (17) autour de l'axe d'articulation (F-F') et monté coulissant dans la coulisse (72) ;
et en ce que les moyens de blocage (77) du mouvement de translation relative du support (19) par rapport à la structure (17) le long de l'axe de coulissement (E-E') comportent :
- une encoche (79) ménagée dans le support (19) et débouchant latéralement dans ladite coulisse (72) par rapport audit deuxième axe (E-E') ; et
- un organe de blocage (78), monté sur la structure (17) et mobile par rapport au support (19) entre au moins une position de blocage dans l'encoche (79) et une position libre dans la coulisse (72).

3. Siège (15) selon la revendication 2, **caractérisé en ce que** l'organe de blocage (78) est monté mobile sur la structure (17), et **en ce que** les moyens de blocage (77) du mouvement de translation relative du support (19) par rapport à la structure (17) le long de l'axe de coulissement (E-E') comprennent en outre des moyens de rappel (87) de l'organe de blocage (78) dans sa position de blocage.

4. Siège (15) selon la revendication 3, **caractérisé en ce que** la structure (17) comporte une butée d'arrêt (86B) de l'organe de blocage (78) suivant sa course de déplacement dans l'encoche (79) vers sa position libre pour au moins une position intermédiaire du support (19) par rapport à la structure (17), pour empêcher l'organe de blocage (78) d'atteindre sa position libre.

5. Siège (15) selon l'une des revendications 3 ou 4, **caractérisé en ce que** la structure (17) comprend en outre une butée d'immobilisation (86A) de l'organe, de blocage (78), pour immobiliser l'organe de blocage (78) par rapport à la structure (17) à l'encontre de l'action des moyens de rappel (87), le support (19) restant mobile en rotation par rapport à la structure (17) au-delà de la position de libération jusqu'à ce que l'organe de blocage (78) atteigne sa position libre.

6. Siège (15) selon la revendication 2, **caractérisé en ce que** l'organe de blocage (78) est monté fixe sur ladite structure (17).

7. Siège (15) selon la revendication 6, **caractérisé en ce que** les moyens d'articulation (21) entre ladite structure (17) et ledit support (19) comprennent en outre des moyens de rappel du support (19) dans ladite position active.

8. Siège (15) selon l'une quelconque des revendications précédentes, **caractérisé en ce que** le support (19) s'étend longitudinalement le long d'un axe de support, l'axe de coulissement (E-E') et l'axe de support étant sensiblement parallèles.

9. Véhicule automobile, **caractérisé en ce qu**'il comprend au moins un siège (15) selon l'une quelconque des revendications précédentes

10. Véhicule selon la revendication 9, **caractérisé en ce qu**'il comprend en outre un plancher (11) et au moins une bielle (35) articulée en une première extrémité (39) à un point de la structure (17), autour d'un axe (A-A') de structure, sensiblement transversal par rapport à une direction longitudinale du véhicule, ladite bielle (35) étant articulée en une deuxième extrémité (41) à un point du plancher (13), autour d'un axe de plancher (B-B') parallèle audit axe (A-A') de structure.

## Claims

1. Folding seat (15), and in particular a car seat, of the type containing:
- a seating structure (17);
- a back support (19), joined to the seating structure (17) around an articulation axis (F-F') that is substantially transverse in relation to the seat (15), this support (19) is also mounted so as to describe translatory movement in relation to the said structure (17) along a sliding axis (E-E'), substantially perpendicular to the articulation axis (F-F'), the support (19) being capable of movement between an active position protruding in relation to the said structure (17) and a folded position;
**characterised in that** the translatory movement and rotation of the support (19) in relation to the structure (17) are independent, and **in that** it also contains independent means (75; 77) of blocking the translatory movement and the rotation respectively of each of the said movements of the support (19) in relation to the said structure (17).

2. Seat (15) according to Claim 1, **characterised in that** it contains articulation means (21) between the seating structure (17) and the support (19), these articulation means (21) containing:
- a runner (72) provided within the support (19) and extending substantially parallel to the sliding axis (E-E');
- a slide (73), mounted so as to rotate on the seating structure (17) around the articulation axis (F-F') and mounted so as to slide within the runner (72);
and **in that** the means of blocking (77) the relative translatory movement of the support (19) in relation to the seating structure (17) along the sliding axis (E-E') contain:
- a notch (79) provided within the support (19) and opening laterally into the said runner (72) in relation to the said second axis (E-E'); and
- a blocking mechanism (78) mounted on the structure (17) and moveable in relation to the support (19) between at least one blocking position in the notch (79) and one free position in the runner (72).

3. Seat (15) according to Claim 2, **characterised in that** the blocking mechanism (78) is mounted so as to move on the seating structure (17) and **in that** the means of blocking (77) the relative translatory movement of the support (19) in relation to the seating structure (17) along the sliding axis (E-E') also contain mechanisms for returning (87) the blocking mechanism (78) to its blocking position.

4. Seat (15) according to Claim 3, **characterised in that** the seating structure (17) contains a stop (86B) for the blocking mechanism (78) in its movement within the notch (79) towards its free position for at least one intermediate position of the support (19) in relation to the structure (17), in order to prevent the blocking mechanism (78) from reaching its free position.

5. Seat (15) according to one of Claims 3 or 4, **characterised in that** the seating structure (17) also includes a stop (86A) for immobilising the blocking mechanism (78) in order to immobilise the blocking mechanism (78) in relation to the seating structure (17) against the action of the return mechanisms (87), the support (19) remaining capable of rotation in relation to the structure (17) beyond the position of liberation, until the blocking mechanism (78) reaches its free position.

6. Seat (15) according to Claim 2, **characterised in that** the blocking mechanism (78) is mounted so as to fix to the said seating structure (17).

7. Seat (15) according to Claim 6, **characterised in that** the articulation system (21) between the said seating structure (17) and the said support (19) also contain means for returning the support (19) back to the said active position.

8. Seat (15) according to any of the previous claims, **characterised in that** the support (19) extends longitudinally along a support axis, the sliding axis (E-E') and the support axis being substantially parallel.

9. Automobile vehicle, **characterised in that** it contains at least one seat (15) according to any one of the previous claims.

10. Vehicle according to Claim 9, **characterised in that** it is also contains a floor (11) and at least one connecting rod (35) joined at one extremity (39) to a point on the structure (17), around a structural axis (A-A'), substantially transverse in relation to a longitudinal direction of the vehicle, the said connecting rod (35) being joined at its second extremity (41) to a point on the floor (13) around a floor axis (B-B') parallel to the said structural axis (A-A').

## Patentansprüche

1. Klappsitz (15), insbesondere Kraftfahrzeugsitz des Typs, der umfasst:
- einen Sitzaufbau (17);
- eine Rückenlehne (19), die an dem Aufbau (17) um eine im Wesentlichen in Bezug auf den Sitz (15) quer verlaufende Gelenkachse (F-F') gelenkig angebracht ist, wobei die Lehne (19) außerdem in Bezug auf den Aufbau (17) entlang einer Gleitachse (E-E') in Translation beweglich montiert ist, die im Wesentlichen senkrecht zu der Gelenkachse (F-F') verläuft, wobei die Lehne (19) zwischen einer aktiven, in Bezug auf den Aufbau (17) vorspringenden Stellung und einer umgeklappten Stellung beweglich ist;
**dadurch gekennzeichnet, dass** die Translations- und die Drehbewegungen der Lehne (19) in Bezug auf den Aufbau (17) unabhängig sind, und **dadurch**, dass er des Weiteren unabhängige Mittel (75; 77) zum Blockieren jeweils in der Translation und der Drehung jeder der entsprechenden Bewegungen der Lehne (19) in Bezug auf den Aufbau (17) aufweist.

2. Sitz (15) nach Anspruch 1, **dadurch gekennzeichnet, dass** er Gelenkverbindungsmittel (21) zwischen dem Aufbau (17) und der Lehne (19) aufweist, wobei diese Gelenkverbindungsmittel (21) enthalten:
- eine Gleitschiene (72), die in der Lehne (19) angeordnet ist und sich im Wesentlichen parallel zu der Gleitachse (E-E') erstreckt;
- ein Gleitstück (73), das an dem Aufbau (17) um die Gelenkachse (F-F') drehbar montiert ist und gleitend in der Gleitschiene (72) montiert ist;
und **dadurch**, dass die Blockierungsmittel (77) der relativen Translationsbewegung der Lehne (19) in Bezug auf den Aufbau (17) entlang der Gleitachse (E-E') enthalten:
- eine Raste (79), die in der Lehne (19) angeordnet ist und in Bezug auf die zweite Achse (E-E') seitlich in die Gleitschiene (72) mündet; und
- ein Blockierorgan (78), das auf dem Aufbau (17) montiert ist und in Bezug auf die Lehne (19) zwischen wenigstens einer Blockierposition in der Raste (79) und einer freien Position in der Gleitschiene (72) beweglich ist.

3. Sitz (15) nach Anspruch 2, **dadurch gekennzeichnet, dass** das Blockierorgan (78) beweglich auf dem Aufbau (17) montiert ist und **dadurch**, dass die Blockiermittel (77) der relativen Translationsbewegung der Lehne (19) in Bezug auf den Aufbau (17) entlang der Gleitachse (E-E') des Weiteren Mittel (87) zum Rückstellen des Blockierorgans (78) in seine Blockierposition enthalten.

4. Sitz (15) nach Anspruch 3, **dadurch gekennzeichnet, dass** der Aufbau (17) einen Anschlagstopp (86B) des Blockierorgans (78) dem Verlauf seiner Verschiebung in der Raste (79) in Richtung auf seine freie Position folgend für wenigstens eine Zwischenposition der Lehne (19) in Bezug auf den Aufbau (17) aufweist, um zu verhindern, dass das Blockierorgan (78) seine freie Position erreicht.

5. Sitz (15) nach einem der Ansprüche 3 oder 4, **dadurch gekennzeichnet, dass** der Aufbau (17) des Weiteren einen Feststellanschlag (86A) des Blockierorgans (78) aufweist, um das Blockierorgan (78) in Bezug auf den Aufbau (17) beim Eintreten der Einwirkung der Rückstellmittel (87) festzustellen, wobei die Lehne (19) in Bezug auf den Aufbau (17) über die Position der Freigabe hinaus in Drehung beweglich bleibt, bis das Blockierorgan (78) seine freie Position erreicht.

6. Sitz (15) nach Anspruch 2, **dadurch gekennzeichnet, dass** das Blockierorgan (78) fest auf dem Aufbau (17) montiert ist.

7. Sitz (15) nach Anspruch 6, **dadurch gekennzeichnet, dass** die Gelenkverbindungsmittel (21) zwischen dem Aufbau (17) und der Lehne (19) des Weiteren Mittel zum Rückstellen der Lehne (19) in die aktive Position enthalten.

8. Sitz (15) nach einem der vorhergehenden Ansprüche, **dadurch gekennzeichnet, dass** die Lehne (19) sich in Längsrichtung entlang einer Stützachse erstreckt, wobei die Gleitachse (E-E') und die Stützachse im Wesentlichen parallel verlaufen.

9. Kraftfahrzeug, **dadurch gekennzeichnet, dass** es wenigstens einen Sitz (15) nach einem der vorhergehenden Ansprüche aufweist.

10. Fahrzeug nach Anspruch 9, **dadurch gekennzeichnet, dass** es des Weiteren einen Boden (11) und wenigstens eine Stützstrebe (35) enthält, die an einem ersten Ende (39) an einem Punkt des Aufbaus (17) um eine Achse (A-A') des Aufbaus gelenkig befestigt ist, die im Wesentlichen in Bezug auf eine Längsrichtung des Fahrzeugs quer verläuft, wobei die Stützstrebe (35) an einem zweiten Ende (41) an einem Punkt des Bodens (13) um eine zur Achse (A-A') des Aufbaus parallele Bodenachse (B-B') gelenkig befestigt ist.
